# EUROPEAN PATENT SPECIFICATION

(11) **EP 3 279 897 B1**
(45) Date of publication and mention of the grant of the patent: **03.07.2019**
(21) Application number: 16465523.5
(22) Date of filing: 05.08.2016
(51) Int. Cl.: G10L 25/63, G10L 25/48, G10L 17/26, B60W 50/08, B60K 28/02, G06K 9/00, B60W 50/14, B60K 28/06, G10L 15/26

(54) **SAFETY DEVICE FOR A VEHICLE**
SICHERUNGSVORRICHTUNG FÜR EIN FAHRZEUG
DISPOSITIF DE SÉCURITÉ POUR VÉHICULE

(43) Date of publication of application: 07.02.2018
(73) Proprietor: Continental Automotive GmbH, 30165 Hannover (DE)
(72) Inventor: Homutescu, Adrian, 700013 Iasi (RO)

(56) References cited:
- US-A1- 2014 218 187

## Description

### Field of the invention

The invention generally relates to the field of an assistance system for a vehicle. Particularly, the invention relates to a safety device for a vehicle, to a vehicle comprising such safety device and to a method for determining a safety level of a vehicle.

### Background of the invention

A safety of a vehicle and/or for an operation of a vehicle depends on a variety of conditions and/or parameters of the vehicle. For instance, the safety may be affected by conditions of vehicle functions, such as e.g. a brake pad wear, a tire wear, correct functioning of vehicle electronics, a fill level of a fuel tank, a fill level of an oil tank and the like. At least some of these conditions usually are assessed and communicated to a driver of the vehicle e.g. by means of dashboard markers.

An example of assessing a safety level of a vehicle can be found in the patent document US 2014/0218187 A1.

### Summary of the invention

It is an objective of the invention to provide a comprehensive safety device for a vehicle like a motor vehicle, a car, a train, an aircraft, a bus and/or a truck.

This objective is achieved by the subject matter of the independent claims. Further exemplary embodiments are evident from the dependent claims and the following description.

According to a first aspect of the invention, a safety device for determining a safety level of a vehicle is provided. The safety device comprises a sound recording device, a data storage device comprising data related to human mood and/or temper, and a control device. The sound recording device is configured for recording a sound of an occupant of the vehicle, such as e.g. a driver and/or any other passenger of the vehicle. Further, the control device is configured for parsing and/or analyzing the recorded sound. Moreover, the control device is configured for comparing the parsed sound to the data in the data storage device and search for markers associated with and/or indicating a mood of the occupant. Further, the control device is configured for determining a safety level based on the markers. Additionally, the control device may be configured to assess a trend of the safety level based on predictable human mood and/or temper, thereby potentially anticipating future markers which may be likely to come along and/or which may occur in the future.

The sound of the occupant may among others include a voice, a speech and/or any other noise of the occupant, such as e.g. a yawning, a coughing, a crying, sighing or any other noise related to a physical and/or physiological state of the occupant.

The parsing and/or analyzing of the recorded sound may comprise dissecting single words and/or phrases from the sound as well as determining single noises and/or sounds, such as e.g. a yawning, a coughing, a crying, sighing or any other noise related to a physical and/or physiological state of the occupant. Also, parsing the sound may comprise determining a pitch of a voice and/or a speed of a voice.

The data in the data storage device may comprise any data related to a human mood, such as anger, joy, happiness, sadness, depression or the like. These data may comprise keywords and/or phrases related to a specific mood, such as abusive language and/or cusswords. In other words, the data may comprise data elements, such as keywords, noises and/or phrases, in combination with an indicator and/or an indicator element for a specific mood associated with each data element.

The parsing and/or analyzing of the recorded sound may comprise an analysis of the vocabulary. For instance, the vocabulary may be analyzed in terms of determining a language and/or language mixtures used by vehicle occupants. Also a commonness and/or rarity of words used (such as e.g. technical, scientific or academic words), a correctness and/or naturalness in using a language and/or a certain type of words or the like may be determined. This may allow to further refine the indicators and/or indicator elements in terms of how relevant a specific mood is to be assessed by the safety device.

The data storage device may receive an update on certain mood indicators and/or markers, which may be general or particular to a certain demographic branch. The update may e.g. be received form an external storage device. Apart from that, the data storage device may also provide, if desired and accepted, to an external storage device input resulting from current events occurred or in progress in the vehicle, with the goal of having improved mood information in the external storage device which may in turn distribute updates to other vehicles and/or safety devices employed in other vehicles.

The safety level may generally relate to a parameter and/or indicator representative for a degree of safety and/or for safe operation of the vehicle. A value of the safety level may represent for instance contributions affecting a concentration of the driver of the vehicle, such as loud noise and/or arguments between occupants in the vehicle. Also, the value may represent technical contributions affecting safe operation of the vehicle, such as e.g. a brake pad wear, a tire wear, correct functioning of vehicle electronics, a fill level of a fuel tank, a fill level of an oil tank and the like.

According to an embodiment, a number of occupants may be determined by the safety device. Based on an analysis of indicators originated from each occupant and the interaction thereof, the safety device may individually grade the contribution of each occupant (or sub-group of occupants) to the overall safety and/or to safe operation of the vehicle. Such contributors may further on be integrated by the safety device in computation of an overall degree of safety, such as the safety level.

Rephrasing the first aspect, the sound recording device records, e.g. by means of a microphone, a sound of an occupant or a plurality of occupants in the vehicle. This recorded sound may at least temporarily be stored on a data storage module. The control device then parses and/or analyzes the recorded sound taking into account the data stored in the storage device. By way of example, the control device may dissect the recorded sound into single sound elements, such as e.g. words, phrases and/or noises, and may then search for markers in the recorded sound by comparing each sound element with the data in the data storage device. E.g. each sound element may be compared with the data elements of the data. The markers may generally refer to specific sound elements, which are representative and/or indicative for a specific mood of a human. Again, by way of example, in case the occupant uses a keyword which may only be used as expression of anger, the control device may parse this keyword as sound element and identify the corresponding data element in the data by searching and comparing the keyword to the data elements. As described above, for each data element an indicator of a specific mood may be stored in the data, and based on this indicator, the control device may then determine and/or assess that the keyword used is a marker associated to the specific mood "anger". By determining this marker related to anger and by taking it into account, the control device may then determine a comparable low safety level, because anger or an angry mood may distract a driver, thereby lowering a safety level of the vehicle or the operation thereof. Of course, anger is just an example of mood that can distract the driver.

According to an embodiment, the markers comprise at least one of a pitch of a voice, a speed of a voice, a keyword related to a specific mood, a human sound related to a specific mood, a voice tone. All these parameters may serve as markers as they may be indicative of a specific mood of a human and/or of the occupant.

According to an embodiment, the data storage device can store preferably some amount of information about a regular driver and/or passenger of the vehicle, who usually drives the vehicle and/or who usually is a passenger, respectively. This may allow to refine an indicator significance specific to each occupant and may further allow the safety device to better assess thereafter the safety level and/or make accurate assessments with a lower amount of input. Further on, the safety device may request the data storage device to store and retrieve, e.g. after a certain event, data that may be relevant for assessment of future interactions with and/or among passengers during future rides, as for instance how the occupant's behavior may be affected by various situations. In other words, the safety device may assume the existence of and look for behavioral patterns specific to each individual and/or occupant. The safety device may use data on behavioral patterns and regularly check an evolution thereof.

Embodiments of the invention may be regarded as being based on thoughts and findings described in the following. Apart from technical safety aspects, such as brake pad wear, a safety level in a vehicle may be affected by individuals and/or occupants and/or humans in the vehicle. A safety related to the occupants themselves is currently not assessed by any car assistance system, and it is not considered in traffic safety. Accordingly, safety contributors as the driver and other occupants are currently not considered at all in assessing a safety level of a vehicle.

For instance, while sharing the space of a car, especially after a hard day's work or after several hours of cruise, occupants tend to be more tired and therefore less receptive to traffic challenges and/or emotions of other occupants. This may result in distraction of the driver, a higher chance for accidents and uncomfortable cruise experience for some or all occupants. The safety level may generally be influenced by e.g. traffic conditions, vehicle conditions and emotional status of occupants including the driver. By determining the safety level by means of the inventive safety device taking into account the mood of occupants, fluctuations of the overall or global safety level of a vehicle may be determined. This global safety level fluctuates and/or is affected by multiple contributors, and so far no consistent approach exists to assess it and/or mitigate it, as well as to communicate it to the driver and/or other occupants. A reduced safety level due to e.g. an argument between the driver and a further occupant may increase chances of an accident and may also lead to uncomfortable cruise experience for some or all occupants of the vehicle. By means of the inventive safety device the global safety level arising from a combined effect of contributors, such as technical contributors and occupants, may advantageously be determined and the safety may be increased. Further, by means of the safety device, a reduced safety level mainly arising e.g. from emotional status and quality of social interaction of and among vehicle occupants may be assessed. Further, the overall safety level associated with person transportation may be assessed by an integration of safety contributors such as emotional status of occupants, quality of social interaction, vehicle condition, traffic condition, route and the like. Also, a degradation of the wellness, such as a quality of social interaction of vehicle occupants may be improved by the safety device. Moreover, state of the art research about reaction to stress, fatigue, social psychology and/or emotion may be employed in the safety device, e.g. in the data of the data storage.

According to an embodiment, the control device is configured for distinguishing sounds of a plurality of occupants of the vehicle, wherein the control device is configured for parsing the sound of each occupant separately. This way, the contribution to safety level of individual occupants may be determined by means of the safety device.

According to an embodiment, the control device is configured for comparing the determined safety level to a definable threshold value, wherein the control device is configured for triggering at least one of an acoustic signal, a visual signal and a vibration signal if the determined safety level reaches and/or undercuts the threshold value. This way, e.g. the driver and/or the occupants may be warned if or when the threshold value is reached, allowing to mitigate and or increase the safety level and thereby increasing overall safety and reducing a chance of accidents. In specific cases, the degradation of emotional status of occupants may be prevented by specific interactions with the occupants. Such interactions may comprise e.g. advises, which may be provided by any appropriate means, such as e.g. a light signal, which may be adapted in shape, color and/or intensity. Also, the vibration signal may be provided e.g. in the steering wheel in order to call for the driver's attention. Further, sound warnings and/or verbalized advice, e.g. using an appropriate language for the occupants may advantageously be used. Moreover, prediction models may be used to determine an appropriate interaction with the occupants, including state of the art research about reaction to stress, fatigue, emotion and/or social psychology.

According to an embodiment, the control device is further configured to derive demographic information from the parsed sound of the occupant, wherein the control device is configured for classifying the occupant according to the derived demographic information. The demographic information may also comprise identifying a demographic segment and/or a social group to which occupants belong. For example, the occupant may be classified as boy, girl, man, woman, youngster, teenager, kid, baby and/or elderly. A plurality of occupants may also be classified as family or group of friends. For determining the safety level, such demographic information may be taken into account, i.e. the safety level may be determined based on the demographic information. This may allow to increase a precision and accuracy of determining the safety level.

According to an embodiment, the safety device further comprises a camera for recording image data of the occupant, wherein the control device is configured for determining a facial expression of the occupant. A facial expression may also be advantageously used for determining the mood of the occupant, and thus for determining the safety level. Accordingly, the safety level may be determined based on and/or taking into account the facial expression.

According to an embodiment, the control device is configured to determine the safety level taking into account a traffic condition and/or a vehicle condition. This way, an overall safety level and/or a global safety level may be assessed.

According to an embodiment, the safety device further comprises a communication device for communicating with a further vehicle, wherein the control device is configured to transmit data associated with the determined safety level to the further vehicle via the communication device. By communicating data associated with the safety level to the further vehicle, e.g. the driver of the further vehicle may be made aware of a reduced safety level in a neighboring vehicle and thus may be enabled to take precautions. This way, the safety level assessed by neighboring traffic participants may be shared with other vehicles, and a driver may be warned as/if another vehicle is rolling closer to vehicles where distraction, fatigue and/or other technical factors have led to a reduced safety level. Therefore, the driver can have a more accurate information on the own safety level and be more careful. Also, the driver can get hints about how to diminish risk contributors originating from other vehicles.

The communication device may e.g. refer to an inter-vehicle communication device, such as a vehicle-to-vehicle and/or a car-to-car communication device, which may be based on a wireless communication link between at least two vehicles, such as WLAN (Wireless Local Area Networks).

According to a second aspect of the invention, a vehicle comprising a safety device as described above and in the following is provided.

According to a third aspect of the invention, a method for determining a safety level of a vehicle is proposed. The method comprises the step of recording a sound of an occupant of the vehicle by means of a sound recording device, and the step of parsing the recorded sound by means of a control device, the step of comparing the parsed sound to data related to human mood, which data are comprised in a data storage device. Further, the method comprises the step of searching for markers associated with a mood of the occupant, and the step of determining a safety level based on the markers.

It has to be understood that features of the safety device as described above and in the following may be features of the vehicle and/or the method as described above and in the following. Vice versa, features of the vehicle and/or the method as described above and in the following may be features of the safety device as described above and in the following.

### Brief description of the drawings

Fig. 1 schematically shows a safety device according to an exemplary embodiment.
Fig. 2 schematically shows a vehicle according to an embodiment.
Fig. 3 shows a flow chart illustrating steps of a method for determining a safety level according to an embodiment.

### Detailed description of exemplary embodiments

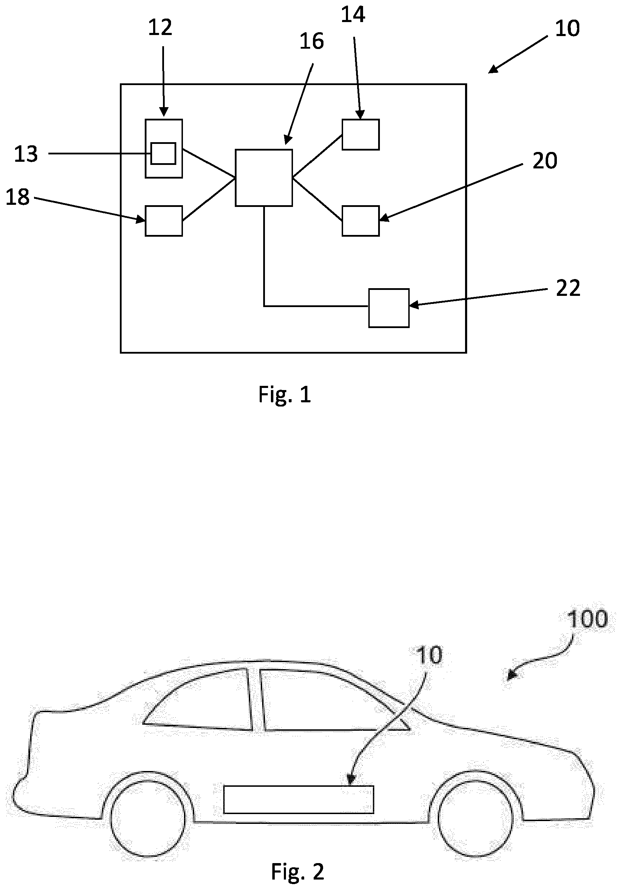

Fig. 1 schematically shows a safety device 10 for determining a safety level of a vehicle (not shown in Fig.1) according to an exemplary embodiment.

The safety device 10 comprises a sound recording device 12, a data storage device 14 comprising data related to human mood, and a control device 16.

By means of the sound recording device 12 a sound of an occupant of the vehicle is recorded. The recorded sound may e.g. be stored in a data storage module 13 of the sound recording device 12. The recorded sound is then parsed and/or analyzed by means of the control device 16, which is configured for comparing the parsed sound to the data in the data storage device 14 and search for markers associated with a mood of the occupant.

The recorded sound may also be parsed "on-the-fly", meaning that only a short buffer of up to a few phrases can be actually stored. In other words, once a certain string of word is already parsed, the markers are stored and considered while the words in the string themselves may be dismissed and/or erased. Then, another string of words may come into parsing and so on.

The control device 16 further determines a safety level of the vehicle based on the markers, which may include at least one of a pitch of a voice, a speed of a voice, a keyword related to a specific mood, a human sound related to a specific mood, a voice tone.

By means of the control device 16 also the sounds of a plurality of occupants of the vehicle may be distinguished the control device 16 may parse the sound of each occupant separately in order to comprehensively determine the safety level.

The safety device 10 further comprises a warning device 18, which may e.g. comprise a lamp, a speaker and/or a vibration element. The control device 16 compares the determined safety level to a definable threshold value and triggers the warning device e.g. by triggering an acoustic signal, a visual signal and/or a vibration signal if/when the determined safety level reaches the threshold value.

In order to further increase an accuracy of the determination of the safety level, the control device 16 may derive demographic information from the parsed sound of the occupant, such as e.g. the age and/or sex of the occupant. The control device 16 may further classify the occupant according to the derived demographic information, e.g. as youngster, kid, man, woman, boy, girl, elderly, teenager and/or baby.

The safety device 10 further comprises a camera 20 for recording image data of the occupant, wherein the control device 16 is configured for determining a facial expression of the occupant in order to further increase an accuracy in determining the safety level.

Moreover, the safety device 10 may comprise at least one further sensor element 21 for determining a traffic condition and/or a vehicle condition. The sensor element 21 may e.g. comprise a navigation device, a tire pressure sensor, a fill level sensor or the like. The control device 16 is configured to determine the safety level taking into account the traffic condition and/or the vehicle condition in order to comprehensively determine the safety level and/or a global or overall safety level of the vehicle.

The safety device 10 further comprises a communication device 22 for communicating with a further vehicle. The communication device 22 may e.g. be an inter-vehicle communication device. The control device 16 is configured to transmit data associated with the determined safety level to the further vehicle via the communication device 22. Also, data associated with the safety level of the further vehicle may be received by the safety device 10 via the communication device 22.

In the following various features, functions and elements of the safety device 10 are described. The safety device 10 may listen to each occupant and trace mood related marker elements or markers. Such mood related markers may e.g. comprise a type of words used by the occupant, such as e.g. a formal word, a casual word, a romantic word or the like. Also a word count, as to determine a speech speed and an amount of information exchanged may serve as marker. Further, a voice tone, as to detect how a person reacts, such as e.g. becoming annoyed or interested, may be used as marker. Further, the usage of specific words, i.e. keywords, may serve as marker. Also sounds like coughing, crying, sighing, yawning or the like may be used as markers. These markers allow to determine and/or assess the physical and psychological state of the occupants. Apart from that, also an involvement of a phone conversation and/or a presence of pets may be taken into account.

The occupants may be classified by means of the safety device 10 according to their position in the vehicle and/or according to demographic information. This may be done based on e.g. an analysis of conversations of the occupants. Further, based on the recorded sound of the occupants, a current state of social interaction among the occupants, such as boredom, fight, distraction or the like may be determined by means of the control device 16.

The determination of the safety level may also comprise determination of facial expression by means of the camera 20 and the control device 16 and/or exhaled alcohol vapors detection.

Based on the aforementioned classification the safety level may be determined with high accuracy. Optionally, cross referencing to traffic and/or vehicle conditions may be applied accounting for data from the sensor element 21, which may include a traffic radio, navigation data, a speed sensor data or the like. If or when the safety level reaches a definable and/or preset threshold value various actions may be taken by means of the warning device 18. This may include blinking a risk marker in a driver's dashboard and/or suggest the driver to have a brake, which may be displayed or output as verbal message. Also, pre-crash settings in main vehicle functions such as brakes, suspension, drive or the like may be triggered by the control device 16. Moreover, a change in a current GPS path to a safer path, despite being longer in distance, may be suggested. Also, stop, change, lower volume of current radio station if broadcasting disturbing and/or distracting material may be triggered by the control device 16. Further, an increase in brightness of and/or a shift to warning color of displayed information in the dashboard may be triggered. Also, suggestions like to back seat occupants (e.g. kids) to disengage conversations by offering on the back seat display some enjoyable entertainment as cartoons or games or attractive information or the like may be triggered.

Overall, this may facilitate the quality of a social interaction level. Moreover, one or several tactics to increase the safety level e.g. by verbal general advices to all occupants, verbal specific advices to a specific occupant (e.g. in a volume as to be confidential), decisions to intervene and/or to verbally interact with occupants may be taken according to the determined safety level.

Summarizing, the safety level is monitored by the safety device 10, and the driver may be made aware of the actual safety level as well as the root cause of the safety level.

In the following, various use cases for the safety device 10 are exemplary summarized.

A driver may be angry and speaks to an occupant in an angry tone already for a longer time. The safety device 10 may provide an advice by means of the warning device 18 in a lower, calming tone to the occupant, such as for instance "Please give your husband some time to reflect on your words". Also, the safety device 10 may speak to the driver and the occupant via the warning device 18 something like "Sorry to interrupt. I would like to indulge you with this relaxing song. It takes only five minutes and then you can continue the conversation." Generally, this may increase the safety level and a quality of social interaction.

E.g. a male driver may not be mentally aware that another female occupant is unhappy due to various external factors or lack of attention of the driver to the occupant. It is likely that the occupant's wellness would degrade leading to complaints or the like. In response, the safety device 10 may provide an advice in a lower, calming tone via the warning device 18 to the driver: "Although you might not have noticed, the occupant is unhappy right now, why don't you ask her how her day went?" or "How about a fresh joke to cheer her up?". This may increase the safety level and the quality of social interaction.

In another situation, a driver, man or woman, uses a GPS to reach a parking spot inside a big city. The GPS reads out loud the directions. The safety device 10 may trigger a change as to how the instructions should be read out according to the gender of the driver. For example, instructions for a man may be like "Go on for 200 m north, than turn right, drive for 500 m", whereas instructions for a woman may be "Go over to the Union Square, than turn right and drive until you see the Vasile Alecsandri Theater". Accordingly, the driver may reach the destination safely, city traffic may be improved and predictable stress to the driver may be averted.

In another situation, a driver may be tired and so is another occupant. The outer risk contributors may be high, such as e.g. rain, sleet, poor visibility, difficult road or the like. The voice tone of the driver and/or the occupant shows levels of stress. The overall safety level associated with both the driver and the occupant is constantly assessed by means of the safety device 10. The safety device 10 may speak to the occupants via the warning device 18: "I strongly advise, due to driving conditions, that you switch places and let the occupant drive for the rest of the trip." Accordingly, the safety level is increased, as female drivers are less prone to take risks.

Further, a family is having a trip in the mountains, in particular in a high pass road with many twists and turns that bring about multiple accelerations and decelerations in quick series with a centrifugal component. The driver may be paying attention to the road and not paying attention to the children on the back seat. The mother may be enthralled by the scenery and not paying attention to the children on the back seat. The children start to become car-sick due to car movements. Their voice tone lowers down, they stop speaking lively among themselves, stop looking out the window or the like. All this may be determined by means of the safety device 10. Car sickness commencing to one or all children, based on age and/or resilience to such condition. The safety device 10 may speak to the driver via the warning device 18: "The children are feeling sick, please consider lowering the speed and/or making a short break." Accordingly, a wellness may be increased, and car sickness may be averted and/or mitigated.

Fig. 2 schematically shows a vehicle 100 according to an embodiment. The vehicle 100 comprises a safety device 10 as described above and in the following.

The safety device 10 shown in Fig. 2 comprises the same functions, features and elements as described in section "summary of the invention" as well as with reference to Fig. 1.

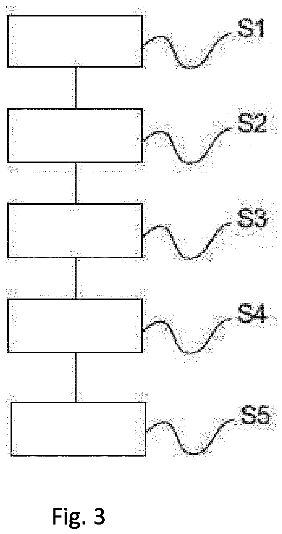

Fig. 3 shows a flow chart illustrating steps of a method for determining a safety level of a vehicle 100 according to an embodiment.

The method comprises a step S1 of recording a sound of an occupant of the vehicle 100 by means of a sound recording device 12. In a step S2 the recorded sound is parsed by means of a control device 16, and in a step S3 the parsed sound is compared to data related to human mood, which data are comprised in a data storage device 14. In a further step S4 markers associated with a mood of the occupant are searched in the recorded sound taking into account the data of the data storage device 14. In a further step S5 a safety level is determined based on the markers.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A safety device (10) for determining a safety level of a vehicle (100), the safety device comprising:
a sound recording device (12);
a data storage device (14) comprising data related to human mood; and
a control device (16);
wherein the safety device (10) is configured for determining a number of occupants of said vehicle;
wherein the sound recording device (12) is configured for recording sounds of said occupants of the vehicle (100); wherein the control device (16) is configured for distinguishing sounds of said occupants of the vehicle (100);
wherein the control device (16) is configured for parsing the sound of each occupant separately;
wherein the control device (16) is configured for comparing the parsed sound to the data in the data storage device (14);
wherein the control device (16) is configured for searching for markers associated with a mood of each occupant based on the data;
wherein the safety device is configured for individually grading the contribution of each occupant to the overall safety and/or to safe operation of the vehicle, based on an analysis of markers originated from each occupant and the interaction thereof, and
wherein the control device (16) is configured for determining a safety level based on the markers and said contributions.

2. The safety device (10) according to claim 1,
wherein the markers comprise at least one of a pitch of a voice, a speed of a voice, a keyword related to a specific mood, a human sound related to a specific mood, a voice tone.

3. The safety device (10) according to one of the preceding claims,
wherein the control device (16) is configured for comparing the determined safety level to a definable threshold value; and
wherein the control device (16) is configured for triggering at least one of an acoustic signal, a visual signal and a vibration signal if the determined safety level reaches or falls below the threshold value.

4. The safety device (10) according to one of the preceding claims,
wherein the control device (16) is further configured to derive demographic information from the parsed sound of the occupant; and
wherein the control device (16) is configured for classifying the occupant according to the derived demographic information.

5. The safety device (10) according to one of the preceding claims, further comprising:
a camera (20) for recording image data of the occupant;
wherein the control device (16) is configured for determining a facial expression of the occupant.

6. The safety device (10) according to one of the preceding claims,
wherein the control device (16) is configured to determine the safety level taking into account a traffic condition and/or a vehicle condition.

7. The safety device (10) according to one of the preceding claims, further comprising:
a communication device (22) for communicating with a further vehicle,
wherein the control device (16) is configured to transmit data associated with the determined safety level to the further vehicle via the communication device (22).

8. A vehicle (100) comprising a safety device according to one of the preceding claims.

9. A method for determining a safety level of a vehicle (100), the method comprising:
determining a number of occupants of said vehicle;
recording sounds of said occupants of the vehicle (100) by means of a sound recording device (12);
distinguishing sounds of said occupants of the vehicle (100) ;
parsing the recorded sound by means of a control device (16), wherein the sound of each occupant is parsed separately;
comparing the parsed sound to data related to human mood, which data are comprised in a data storage device (14);
searching for markers associated with a mood of each occupant based on the data;
individually grading the contribution of each occupant to the overall safety and/or to safe operation of the vehicle, based on an analysis of markers originated from each occupant and the interaction thereof; and,
determining a safety level based on the markers and on said contribution.

## Patentansprüche

1. Sicherheitsvorrichtung (10) zum Feststellen eines Sicherheitsniveaus eines Fahrzeugs (100), wobei die Sicherheitsvorrichtung Folgendes umfasst:
eine Geräuschaufnahmevorrichtung (12);
eine Datenspeichervorrichtung (14), die Daten im Zusammenhang mit menschlicher Stimmung umfasst; und
eine Steuerungsvorrichtung (16);
wobei die Sicherheitsvorrichtung (10) zum Feststellen einer Anzahl von Insassen des Fahrzeugs ausgebildet ist;
wobei die Geräuschaufnahmevorrichtung (12) zum Aufnehmen von Geräuschen der Insassen des Fahrzeugs (100) ausgebildet ist;
wobei die Steuerungsvorrichtung (16) zum Unterscheiden von Geräuschen der Insassen des Fahrzeugs (100) ausgebildet ist;
wobei die Steuerungsvorrichtung (16) dazu ausgebildet ist, das Geräusch jedes Insassen separat zu parsen;
wobei die Steuerungsvorrichtung (16) dazu ausgebildet ist, das geparste Geräusch mit den Daten in der Datenspeichervorrichtung (14) zu vergleichen;
wobei die Steuerungsvorrichtung (16) dazu ausgebildet ist, nach Markern im Zusammenhang mit einer Stimmung jedes Insassen auf der Grundlage der Daten zu suchen;
wobei die Sicherheitsvorrichtung dazu ausgebildet ist, den Beitrag jedes Insassen zur allgemeinen Sicherheit und/oder zum sicheren Betrieb des Fahrzeugs auf der Grundlage einer Analyse von Markern, die ihren Ursprung bei jedem einzelnen Insassen haben, und der Interaktion von ihnen einzustufen, und
wobei die Steuerungsvorrichtung (16) dazu ausgebildet ist, auf der Grundlage der Marker und der Beiträge ein Sicherheitsniveau festzustellen.

2. Sicherheitsvorrichtung (10) nach Anspruch 1,
wobei die Marker mindestens eines von einer Stimmhöhe, einer Geschwindigkeit einer Stimme, einem Schlüsselwort im Zusammenhang mit einer bestimmten Stimmung, einem menschlichen Geräusch im Zusammenhang mit einer bestimmten Stimmung und einem Tonfall umfassen.

3. Sicherheitsvorrichtung (10) nach einem der vorangehenden Ansprüche,
wobei die Steuerungsvorrichtung (16) dazu ausgebildet ist, das festgestellte Sicherheitsniveau mit einem definierbaren Schwellenwert zu vergleichen; und
wobei die Steuerungsvorrichtung (16) dazu ausgebildet ist, mindestens eines von einem akustischen Signal, einem optischen Signal und einem Vibrationssignal auszulösen, wenn das festgestellte Sicherheitsniveau den Schwellenwert erreicht oder unter ihn absinkt.

4. Sicherheitsvorrichtung (10) nach einem der vorangehenden Ansprüche,
wobei die Steuerungsvorrichtung (16) ferner dazu ausgebildet ist, von dem geparsten Geräusch des Insassen demographische Informationen abzuleiten; und
wobei die Steuerungsvorrichtung (16) dazu ausgebildet ist, den Insassen entsprechend der abgeleiteten demographischen Informationen zu klassifizieren.

5. Sicherheitsvorrichtung (10) nach einem der vorangehenden Ansprüche, ferner Folgendes umfassend:
eine Kamera (20) zum Erfassen von Bilddaten des Insassen;
wobei die Steuerungsvorrichtung (16) zum Feststellen eines Gesichtsausdrucks des Insassen ausgebildet ist.

6. Sicherheitsvorrichtung (10) nach einem der vorangehenden Ansprüche,
wobei die Steuerungsvorrichtung (16) dazu ausgebildet ist, das Sicherheitsniveau unter Berücksichtigung einer Verkehrsbedingung und/oder einer Fahrzeugbedingung festzustellen.

7. Sicherheitsvorrichtung (10) nach einem der vorangehenden Ansprüche, ferner Folgendes umfassend:
eine Kommunikationsvorrichtung (22) zum Kommunizieren mit einem weiteren Fahrzeug,
wobei die Steuerungsvorrichtung (16) dazu ausgebildet ist, über die Kommunikationsvorrichtung (22) Daten im Zusammenhang mit dem festgestellten Sicherheitsniveau an das weitere Fahrzeug zu übertragen.

8. Fahrzeug (100), umfassend eine Sicherheitsvorrichtung nach einem der vorangehenden Ansprüche.

9. Verfahren zum Feststellen eines Sicherheitsniveaus eines Fahrzeugs (100), wobei das Verfahren Folgendes umfasst:
Feststellen einer Anzahl von Insassen des Fahrzeugs;
Aufnehmen von Geräuschen der Insassen des Fahrzeugs (100) mittels einer Geräuschaufnahmevorrichtung (12);
Unterscheiden von Geräuschen der Insassen des Fahrzeugs (100) ;
Parsen des erfassten Geräuschs mittels einer Steuerungsvorrichtung (16), wobei das Geräusch jedes Insassen separat geparst wird;
Vergleichen des geparsten Geräuschs mit Daten im Zusammenhang mit menschlicher Stimmung, wobei die Daten in einer Datenspeichervorrichtung (14) erfasst sind;
Suchen nach Markern im Zusammenhang mit einer Stimmung jedes Insassen auf der Grundlage der Daten;
einzelnes Einstufen des Beitrags jedes Insassen zur allgemeinen Sicherheit und/oder zum sicheren Betrieb des Fahrzeugs auf der Grundlage einer Analyse von Markern, die ihren Ursprung bei jedem einzelnen Insassen und ihrer Interaktion haben; und
Feststellen eines Sicherheitsniveaus auf der Grundlage der Marker und des Beitrags.

## Revendications

1. Dispositif de sécurité (10) pour déterminer un niveau de sécurité d'un véhicule (100), le dispositif de sécurité comprenant :
un dispositif d'enregistrement sonore (12) ;
un dispositif de stockage de données (14) comprenant des données relatives à l'humeur humaine ; et
un dispositif de commande (16) ;
le dispositif de sécurité (10) étant conçu pour déterminer un nombre d'occupants dudit véhicule ;
le dispositif d'enregistrement sonore (12) étant conçu pour enregistrer les sons desdits occupants du véhicule (100) ;
le dispositif de commande (16) étant conçu pour distinguer les sons desdits occupants du véhicule (100) ;
le dispositif de commande (16) étant conçu pour analyser le son de chaque occupant séparément ;
le dispositif de commande (16) étant conçu pour comparer le son analysé aux données dans le dispositif de stockage de données (14) ;
le dispositif de commande (16) étant conçu pour rechercher des marqueurs associés à une humeur de chaque occupant sur la base des données ;
le dispositif de sécurité étant conçu pour évaluer individuellement la contribution de chaque occupant à la sécurité globale et/ou au fonctionnement sûr du véhicule, sur la base d'une analyse des marqueurs provenant de chaque occupant et de leur interaction, et
le dispositif de commande (16) étant conçu pour déterminer un niveau de sécurité sur la base des marqueurs et desdites contributions.

2. Dispositif de sécurité (10) selon la revendication 1,
les marqueurs comprenant une hauteur de voix et/ou une vitesse de voix et/ou un mot-clé associé à une humeur spécifique et/ou un son humain associé à une humeur spécifique et/ou une tonalité vocale.

3. Dispositif de sécurité (10) selon l'une des revendications précédentes,
le dispositif de commande (16) étant conçu pour comparer le niveau de sécurité déterminé à une valeur seuil définissable ; et
le dispositif de commande (16) étant conçu pour déclencher un signal acoustique et/ou un signal visuel et/ou un signal de vibration si le niveau de sécurité déterminé atteint ou tombe en dessous de la valeur seuil.

4. Dispositif de sécurité (10) selon l'une des revendications précédentes,
le dispositif de commande (16) étant en outre conçu pour dériver des informations démographiques à partir du son analysé de l'occupant ; et
le dispositif de commande (16) étant conçu pour classer l'occupant selon les informations démographiques dérivées.

5. Dispositif de sécurité (10) selon l'une des revendications précédentes, comprenant en outre :
une caméra (20) pour enregistrer des données d'image de l'occupant ;
le dispositif de commande (16) étant conçu pour déterminer une expression faciale de l'occupant.

6. Dispositif de sécurité (10) selon l'une des revendications précédentes,
le dispositif de commande (16) étant conçu pour déterminer le niveau de sécurité en tenant compte d'une condition de circulation et/ou d'une condition du véhicule.

7. Dispositif de sécurité (10) selon l'une des revendications précédentes, comprenant en outre :
un dispositif de communication (22) pour communiquer avec un autre véhicule,
le dispositif de commande (16) étant conçu pour transmettre des données associées au niveau de sécurité déterminé à l'autre véhicule par l'intermédiaire du dispositif de communication (22) .

8. Véhicule (100) comprenant un dispositif de sécurité selon l'une des revendications précédentes.

9. Procédé pour déterminer un niveau de sécurité d'un véhicule (100), le procédé comprenant les étapes consistant à :
déterminer le nombre d'occupants dudit véhicule ;
enregistrer les sons desdits occupants du véhicule (100) au moyen d'un dispositif d'enregistrement sonore (12) ;
distinguer les sons desdits occupants du véhicule (100) ;
analyser le son enregistré au moyen d'un dispositif de commande (16), le son de chaque occupant étant analysé séparément ;
comparer le son analysé à des données relatives à l'humeur humaine, lesdites données étant contenues dans un dispositif de stockage de données (14) ;
rechercher des marqueurs associés à une humeur de chaque occupant sur la base des données ;
évaluer individuellement la contribution de chaque occupant à la sécurité globale et/ou au fonctionnement sûr du véhicule, sur la base d'une analyse des marqueurs provenant de chaque occupant et de leur interaction ; et,
déterminer un niveau de sécurité sur la base des marqueurs et de ladite contribution.
